# EUROPÄISCHE PATENTANMELDUNG

(11) **EP 1 247 677 A1**
(43) Veröffentlichungstag der Anmeldung: **09.10.2002**
(21) Anmeldenummer: 02003970.7
(22) Anmeldetag: 22.02.2002
(51) Int. Cl.: B60J 7/20

(54) **Cabriolet-Fahrzeug**

(30) Priorität: 03.04.2001 DE 10116613
(71) Anmelder: CTS Fahrzeug-Dachsysteme GmbH, 21079 Hamburg (DE)
(72) Erfinder: Hasselgruber, Andreas, Dipl.-Ing., 71735 Eberdingen-Nussdorf (DE); Rösler, Matthias, 70190 Stuttgart (DE); Salz, Wolfram, Dipl.-Ing., 71665 Vaihingen-Enz (DE); Halbweiss, Thomas, Dipl.-Ing., 71686 Remseck (DE)
(74) Vertreter: Müller, Gottfried

(57) **Zusammenfassung**

Ein Cabriolet-Fahrzeug weist ein zwischen einer Schließposition und einer Ablageposition verstellbares Fahrzeugdach (1) auf, wobei das Fahrzeugdach in Ablagestellung in einem Ablageraum versenkt ist, welcher von einer Heckklappe (4) abgedeckt ist, die über eine Heckklappenkinematik (5) schwenkbar mit der Fahrzeugkarosserie (6) verbunden ist.

Die Heckklappenkinematik (5) umfasst vier Gelenkstäbe (8,9,15,16) und einen Koppellenker (12), wobei ein erster und ein zweiter Gelenkstab (8,9) gelenkig mit der Fahrzeugkarosserie (6) und ein dritter und ein vierter Gelenkstab (15,16) gelenkig mit der Heckklappe (4) verbunden ist. Der Koppellenker (12) ist gelenkig mit allen vier Gelenkstaben (8,9,15,16) verbunden.

## Beschreibung

Die Erfindung bezieht sich auf ein Cabriolet-Fahrzeug gemäß dem Oberbegriff des Anspruches 1.

Die Druckschrift DE 199 48 746 A1 offenbart ein Fahrzeugdach, bei dem zur Überführung von Schließ- in Öffnungsstellung das vordere Dachteil zunächst auf einer Teleskop-Schienenführung unter das hintere Dachteil geschoben wird und in einem folgenden Schritt das vordere und das hintere Dachteil als Dachteilpaket entlang weiterer Führungen in den Kofferraum verlagert werden. Die den Kofferraum abdeckende Heckklappe wird zum Ablegen des Dachteilpakets um eine dem Fahrzeuginnenraum benachbarte Drehachse in Öffnungsstellung aufgeschwenkt, wodurch ein Durchführbereich zwischen Heckklappe und Fahrzeugkarosserie zum Überführen der Dachteile in den Kofferraum freigegeben wird. Nach dem Ablegen der Dachteile kann die Heckklappe wieder geschlossen werden.

Die Schwenkachse der Heckklappe liegt auf der dem Fahrzeuginnenraum zugewandten Seite des Fahrzeughecks. Die Heckklappe wird sowohl zum Ablegen des Fahrzeugdaches als auch zum Beladen oder Entladen des Kofferraumes zur Heckseite des Fahrzeuges hin geöffnet.

Um einen ausreichend großen Durchladebereich zwischen der dem Fahrzeuginnenraum zugewandten Vorderkante der Heckklappe und der Fahrzeugkarosserie für das Ablegen des Fahrzeugdaches sicherzustellen, muss die Vorderkante in Richtung des Fahrzeughecks zurückgesetzt sein; andernfalls reicht der Durchladebereich für ein kollisionsfreies Ablegen des Fahrzeugdaches nicht aus. Dies erfordert entweder eine in Fahrzeuglängsrichtung gesehen vergleichsweise schmale Ausbildung der Heckklappe oder lange Gelenkarme zwischen der karosserieseitigen Schwenkachse und der Heckklappe. Im ersten Fall - bei schmaler Ausbildung der Heckklappe - kann auch nur ein schmaler Bereich des Kofferraumes von der Heckklappe abgedeckt werden, so dass bei geöffneter Heckklappe auch nur ein relativ kleiner Zugangsbereich zum Kofferraum freigegeben wird. Im zweiten Fall - lange Gelenkarme - schwenkt die Heckklappe in einer raumgreifenden Bewegung auf und beansprucht einen großen Bewegungsraum.

Ein weiteres Cabriolet-Fahrzeug ist aus der Druckschrift EP 949 103 A1 bekannt, die eine zum Ablegen des Fahrzeugdaches aufschwenkbare Heckklappe offenbart, welche ebenfalls zur Fahrzeugheckseite hin aufzuschwenken ist. Die Heckklappenkinematik umfasst einen Hauptlenker, über den die Heckklappe schwenkbar an der Fahrzeugkarosserie angelenkt ist und der von einem hydraulischen Stellelement beaufschlagt wird. Auf der dem Fahrzeuginnenraum zugewandten Seite ist die Heckklappe in einer Schiebeführung geführt. Bei einer Schwenkbewegung des Hauptlenkers, ausgelöst durch die Beaufschlagung über das hydraulische Stellelement, wird ein Ende der Heckklappe in der Führung translatorisch verschoben, wobei über die Schwenkbewegung des Hauptlenkers die Heckklappe rotatorisch aufgeschwenkt wird. Hierdurch wird ein Durchladebereich freigegeben, durch den das Fahrzeugdach entweder zum Versenken in den Ablageraum oder zum Herausheben aus dem Ablageraum hindurchgeführt werden kann.

In Öffnungsstellung der Heckklappe ragt diese auf Grund der translatorischen Verschiebung in Richtung des Fahrzeughecks weit über das Heckende des Fahrzeuges hinaus, wodurch die Gefahr einer Kollision mit einem dem Fahrzeugheck unmittelbar benachbarten Gegenstand besteht.

Aus der Druckschrift DE 198 00 156 A1 ist eine den Ablageraum für das Fahrzeugdach verschließende Heckklappe bekannt, die über eine Viergelenkkinematik mit der Fahrzeugkarosserie verbunden ist. Zum Öffnen des Ablageraums wird die Heckklappe mit ihrer der Fahrgastzelle benachbarten Seite angehoben. Da Viergelenkkinematiken zusätzlich zu einer reinen Schwenkbewegung auch eine translatorische Verschiebung bewirken, besteht die Gefahr, dass beim Öffnen die Hinterkante der Heckklappe die heckseitige Karosserielinie überschreitet. Dies kann zwar dadurch vermieden werden, dass die Gelenkkinematik der Heckklappe nahe der Fahrgastzelle an die Fahrzeugkarosserie angebunden wird; in diesem Fall ist jedoch bei geöffneter Heckklappe der zum Ablegen des Fahrzeugdaches erforderliche Durchtritt in den Ablageraum eingeschränkt.

Der Erfindung liegt das Problem zugrunde, ein Cabriolet-Fahrzeug zu schaffen, dessen Fahrzeugdach mit konstruktiv geringem Aufwand abzulegen ist, wobei während des Öffnens und Schließens des Daches sämtliche Fahrzeug- und Dachteile innerhalb der Karosserielinie des Fahrzeuges liegen sollen.

Dieses Problem wird erfindungsgemäß mit den Merkmalen des Anspruches 1 gelöst. Vorteilhafte Weiterbildungen des Erfindungsgegenstandes sind den Unteransprüchen zu entnehmen.

Die Heckklappe, welche den Ablageraum zur Aufnahme des Fahrzeugdaches in Öffnungsstellung abdeckt, ist über eine Heckklappenkinematik schwenkbar mit der Fahrzeugkarosserie verbunden, wobei die Heckklappenkinematik vier Gelenkstäbe und einen Koppellenker umfasst, von denen ein erster und ein zweiter Gelenkstab gelenkig mit der Fahrzeugkarosserie, ein dritter und ein vierter Gelenkstab gelenkig mit der Heckklappe und der Koppellenker gelenkig mit allen vier Gelenkstäben verbunden ist. Im Unterschied zum Stand der Technik weist die Heckklappenkinematik ausschließlich Drehgelenke auf; auf eine Schiebeführung in einer Kulisse kann verzichtet werden.

Die ausschließlich Gelenkstäbe, Drehgelenke und einen Koppellenker aufweisende Heckklappenkinematik erlaubt auch ohne Kulissenführungen ein weites Aufschwenken der Heckklappe, wobei in Offenstellung die Heckklappe in einem steilen Winkel nach oben aufragt, wodurch sichergestellt ist, dass die Heckklappe sich in Offenstellung innerhalb der Karosserielinie des Fahrzeuges befindet und nicht über das Fahrzeugheck hinausreicht. Der in Offenstellung freigegebene Durchladebereich zwischen Heckklappenkante und Fahrzeuginnenraum reicht aus, um das Fahrzeugdach kollisionsfrei in seinen Ablageraum zu überführen bzw. aus diesem herauszuheben.

Insbesondere für den Fall, dass ein Gelenkstab der Heckklappe und ein karosserieseitiger Gelenkstab sich im Bereich des Koppellenkers ein Drehgelenk teilen, ist die gesamte Heckklappenkinematik als Siebengelenkkinematik ausgebildet, die insgesamt sieben Einzelgelenke umfasst, nämlich je zwei Drehgelenke auf Seiten der Fahrzeugkarosserie und der Heckklappe und insgesamt drei Drehgelenke auf dem die Gelenkstäbe verbindenden Koppellenker, von denen die zwei äußeren Drehgelenke je einem Gelenkstab zur Fahrzeugkarosserie bzw. zur Heckklappe und das mittlere Drehgelenk sowohl einem Gelenkstab zur Fahrzeugkarosserie als auch einem Gelenkstab zur Heckklappe zugeordnet sind. In der Ausführung als Siebengelenkkinematik reicht der Antrieb eines einzelnen Gelenkstabes insbesondere auf der Fahrzeugkarosserieseite für eine eindeutig festgelegte kinematische Öffnungs- und Schließbewegung der Heckklappe aus.

Die Überführungsbewegung in eine steil aufragende Öffnungsposition mit ausreichend großem Durchladebereich kann durch eine spezielle Wahl der Geometrieverhältnisse der Gelenkstäbe und des Koppellenkers unterstützt werden. Vorteilhaft liegen die beiden heckklappenseitigen Gelenkstäbe in einem verhältnismäßig geringen Abstand zueinander, wohingegen die beiden karosserieseitigen Gelenkstäbe einen hierzu signifikant größeren Abstand aufweisen, indem die beiden karosserieseitigen Drehgelenke deutlich weiter auseinander liegen, beispielsweise mindestens fünfmal weiter auseinander liegen als die beiden heckklappenseitigen Drehgelenke. Auch die Drehgelenke auf dem Koppellenker sind in der Weise platziert, dass das äußere, dem karosserieseitigen Gelenkstab zugeordnete Drehgelenk einen erheblich größeren Abstand zum mittleren, gemeinsamen Drehgelenk aufweist als das gegenüberliegende äußere, dem heckklappenseitig angelenkten Gelenkstab zugeordnete Drehgelenk. Weiterhin kann es vorteilhaft sein, denjenigen karosserieseitigen Gelenkstab, welcher zur automatischen Anhebung und Absenkung der Heckklappe von einem Stellglied beaufschlagt wird, signifikant länger auszubilden als den zweiten karosserieseitigen Gelenkstab, um eine gute Hebelwirkung für die Auslösung der Drehbewegung am längeren Gelenkstab zu erreichen. Die steile Anhebung der Heckklappe in Offenstellung kann zusätzlich durch einen abgeknickten Koppellenker unterstützt werden, wobei der Knick im Koppellenker insbesondere im mittleren, gemeinsamen Drehgelenk liegt und in der Weise ausgerichtet ist, dass der zum heckklappenseitigen Drehgelenk gehörende Abschnitt des Koppellenkers in Richtung Heckklappe gerichtet ist.

Die Heckklappe kann gegebenenfalls auch den Kofferraum des Fahrzeuges abdecken und sowohl zum Öffnen des Kofferraumes als auch zur Ablage des Fahrzeugdaches eine gleichsinnige, identische Öffnungsbewegung ausführen. Eine zusätzliche Kinematik zum Öffnen des Kofferraumes ist dadurch entbehrlich.

Für den Fall, dass die Heckklappe zugleich den Kofferraumdeckel bildet, ist insbesondere auch der Ablageraum mit dem Kofferraum des Fahrzeuges identisch bzw. bildet einen Teil des Kofferraumes.

Ausführungsbeispiele der Erfindung sind in den Figuren dargestellt und werden im Folgenden beschrieben. Es zeigen:
- Fig. 1: eine Seitenansicht auf ein Cabriolet-Fahrzeug mit geschlossenem Fahrzeugdach und geschlossener Heckklappe,
- Fig. 2: das Cabriolet-Fahrzeug mit teilweise geöffneter Heckklappe,
- Fig. 3: das Cabriolet-Fahrzeug mit vollständig geöffneter Heckklappe und einem zwischen Heckklappe-Vorderkante und Fahrzeuginnenraum freigegebenem Durchladebereich für das Fahrzeugdach.

In den folgenden Figuren sind gleiche Bauteile mit gleichen Bezugszeichen versehen.

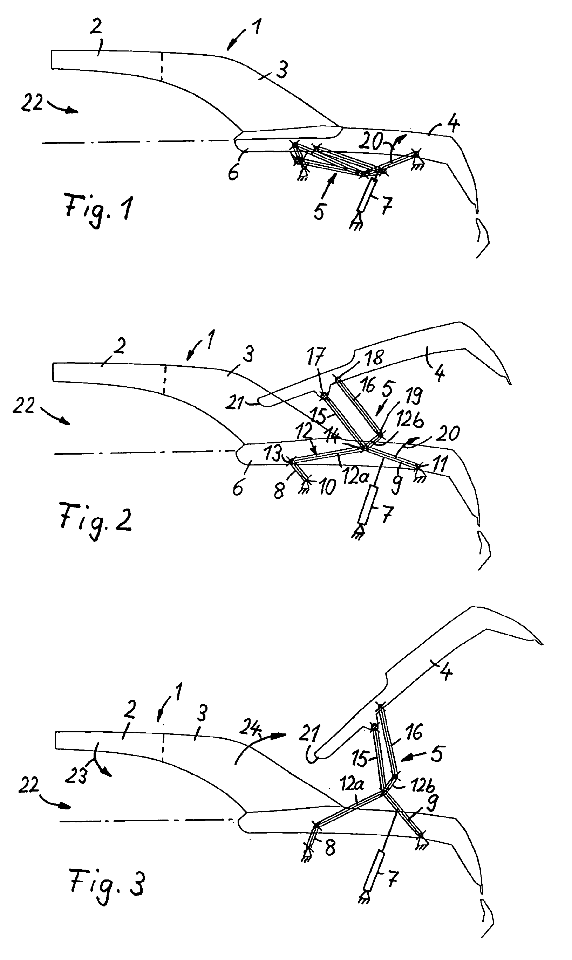

Das in Fig. 1 dargestellte Fahrzeugdach 1 ist insbesondere als Hardtop ausgeführt und umfasst zwei in sich starre, kinematisch gekoppelte Dachteile 2 und 3, die aus der gezeigten Schließstellung, in der der Fahrzeuginnenraum vom Fahrzeugdach 1 überdeckt ist, in eine Offen- bzw. Ablagestellung zu überführen sind, in der das Fahrzeugdach 1 in einem Ablageraum hinter dem Fahrzeuginnenraum abgelegt ist. Der Ablageraum, welcher insbesondere Teil des Kofferraumes ist, ist sowohl in Schließstellung als auch in Offen- bzw. Ablagestellung des Fahrzeugdaches 1 von einer Heckklappe 4 abgedeckt, die zur Überführung des Fahrzeugdaches zwischen seinen beiden Endstellungen geöffnet wird, um den Ablageraum zugänglich zu machen.

Die Heckklappe 4 ist über eine Heckklappenkinematik 5 mit der Fahrzeugkarosserie 6 verbunden und über ein ebenfalls an der Fahrzeugkarosserie 6 gehaltenes hydraulisches Stellglied 7 zwischen der in Fig. 1 dargestellten Schließposition und der in Fig. 3 dargestellten Öffnungsposition zu verstellen. Die Heckklappenkinematik 5 umfasst eine Mehrzahl von Gelenkstäben, die zum Teil an der Fahrzeugkarosserie 6 und zum Teil an der Heckklappe 4 gelenkig gehalten sind, sowie einen von den Gelenkstäben gehaltenen Koppellenker.

In den Figuren 2 und 3 ist die Heckklappenkinematik 5 im Einzelnen dargestellt. Die Heckklappenkinematik 5 umfasst zwei karosserieseitige Gelenkstäbe 8 und 9, von denen ein vorderer, dem Fahrzeuginnenraum benachbarter Gelenkstab 8 kürzer ausgebildet ist und über ein Drehgelenk 10 mit der Fahrzeugkarosserie verbunden und ein dem Fahrzeugheck zugewandter, hinterer Gelenkstab 9 über ein weiteres Drehgelenk 11 schwenkbar mit der Fahrzeugkarosserie verbunden ist und von dem hydraulischen Stellglied 7 beaufschlagt wird. Die beiden karosserieseitigen Gelenkstäbe 8 und 9 sind auf ihrer der Fahrzeugkarosserie abgewandten Seite mit einem Koppellenker 12 über ein erstes, an der Stirnseite des Koppellenkers 12 gehaltenes Drehgelenk 13 und ein zweites, im mittleren Bereich des Koppellenkers angeordnetes Drehgelenk 14 verbunden. Die beiden karosserieseitigen Gelenkstäbe 8 und 9 sowie der die Gelenkstäbe verbindende Koppellenker 12 bilden eine Viergelenkkinematik mit den Drehgelenken 10, 13, 14 und 11.

Weiterhin umfasst die Heckklappenkinematik 5 zwei heckklappenseitige Gelenkstäbe 15 und 16, die über Drehgelenke 17 und 18 gelenkig mit der Heckklappe 4 verbunden sind und auf ihrer der Heckklappe 4 abgewandten Seite über Drehgelenke 14 und 19 ebenfalls mit dem Koppellenker 12 gelenkig verbunden sind, wobei das Drehgelenk 14 des Gelenkstabes 15 zugleich auch das Drehgelenk des karosserieseitigen Gelenkstabes 9 am Koppellenker 12 ist.

Die äußeren, stirnseitigen Drehgelenke 13 und 19 sowie das mittlere Drehgelenk 14 am Koppellenker 12 unterteilen diesen in zwei Abschnitte 12a und 12b, wobei der Koppellenker 12 im Drehgelenk 14 einen Knick von vorteilhaft weniger als 30° aufweist und der Abschnitt 12b zur Heckklappe 4 hin geneigt ist. Der Abschnitt 12a des Koppellenkers 12, der sich zwischen dem Drehgelenk 13 des karosserieseitigen Gelenkstabes 8 und dem gemeinsamen Drehgelenk 14 erstreckt, ist signifikant länger ausgebildet als der zweite Abschnitt 12b zwischen dem gemeinsamen Drehgelenk 14 und dem Drehgelenk 19, welches dem heckseitigen Gelenkstab 16 zugeordnet ist.

Bei einer Beaufschlagung der Heckklappenkinematik durch das hydraulische Stellglied 7 wird der karosserieseitige, hintere Gelenkstab 9 um sein karosserieseitiges Drehgelenk 11 in Pfeilrichtung 20 verschwenkt, wodurch die Heckklappe 4 aus ihrer Schließstellung angehoben und in eine steil aufragende, in Fig. 3 dargestellte Öffnungsposition überführt wird. Die Überführungsbewegung von Schließposition in Öffnungsposition wird vorteilhaft in Abhängigkeit von der aktuellen Fahrzeugdachposition gesteuert, um eine gekoppelte Bewegung der Heckklappe und des Fahrzeugdaches zu erreichen. Die Heckklappe wird hierbei zu Beginn der Überführungsbewegung des Fahrzeugdaches von Schließin Öffnungs- bzw. Ablagestellung und umgekehrt aufgeschwenkt, um zwischen der Heckklappen-Vorderkante 21 und dem Fahrzeuginnenraum 22 einen ausreichend großen Durchladebereich zum Hindurchführen des Fahrzeugdaches 1 freizugeben.

Nachdem die Heckklappe ihre maximale Offenstellung gemäß Fig. 3 erreicht hat, in der der Durchladebereich zwischen Heckklappen-Vorderkante 21 und Fahrzeuginnenraum 22 ebenfalls maximal ist, werden die Dachteile 2 und 3 des Fahrzeugdaches 1 in Pfeilrichtung 23 und 24 zur Überführung des Fahrzeugdaches in Offenbzw. Ablageposition verschwenkt und durch den Durchladebereich zwischen Heckklappen-Vorderkante 21 und Fahrzeuginnenraum 22 hindurchgeführt. Nach der Ablage des Fahrzeugdaches 1 kann die Heckklappe wieder selbsttätig durch Ansteuerung über das Stellglied 7 geschlossen werden.

Zum Schließen des Fahrzeugdaches läuft der gesamte Vorgang in entgegengesetzte Richtung ab. Zunächst wird die Heckklappe 4 aus ihrer Schließposition in ihre maximale Öffnungsposition durch Ansteuerung der Heckklappenkinematik 5 geöffnet. Anschließend wird das Fahrzeugdach aus seiner Ablageposition herausgehoben und durch den Durchladebereich zwischen Heckklappen-Vorderkante 21 und Fahrzeuginnenraum 22 hindurchgeführt und in die Schließstellung überführt. Nach Erreichen der Schließstellung kann die Heckklappe wieder geschlossen werden.

Die Heckklappe 4 kann auch zum Freigeben des Kofferraumes in ihre Öffnungsstellung überführt werden, unabhängig von der aktuellen Position des Fahrzeugdaches 1. Zweckmäßig wird hierzu das Stellglied 7 unabhängig vom Fahrzeugdach 1 angesteuert.

## Patentansprüche

1. Cabriolet-Fahrzeug, mit einem Fahrzeugdach (1), das zwischen einer den Fahrzeuginnenraum überdeckenden Schließstellung und einer den Fahrzeuginnenraum freigebenden Ablagestellung verstellbar ist, in der das Fahrzeugdach (1) in einem Ablageraum versenkt ist, welcher von einer Heckklappe (4) abgedeckt ist, die über eine Heckklappenkinematik (5) schwenkbar mit der Fahrzeugkarosserie (6) verbunden ist, wobei die Heckklappe (4) zur Fahrzeugheckseite hin aufschwenkt,
**dadurch gekennzeichnet,**
**dass** die Heckklappenkinematik (5) vier Gelenkstäbe (8, 9, 15, 16) und einen Koppellenker (12) umfasst, wobei ein erster und ein zweiter Gelenkstab (8, 9) gelenkig mit der Fahrzeugkarosserie (6) und ein dritter und ein vierter Gelenkstab (15, 16) gelenkig mit der Heckklappe (4) und der Koppellenker (12) gelenkig mit allen vier Gelenkstäben (8, 9, 15, 16) verbunden ist.

2. Cabriolet-Fahrzeug nach Anspruch 1,
**dadurch gekennzeichnet,**
**dass** die Drehgelenke (17, 18) des dritten und des vierten Gelenkstabes (15, 16) an der Heckklappe (4) einen geringeren Abstand zueinander aufweisen als die Drehgelenke (10, 11)) des ersten und des zweiten Gelenkstabes (8, 9) an der Fahrzeugkarosserie (6).

3. Cabriolet-Fahrzeug nach Anspruch 1 oder 2,
**dadurch gekennzeichnet,**
**dass** ein an der Fahrzeugkarosserie (6) angelenkter Gelenkstab (9) und ein an der Heckklappe (4) angelenkter Gelenkstab (15) ein gemeinsames Drehgelenk (14) aufweisen, welches an dem sämtliche Gelenkstäbe (8, 9, 15, 16) verbindenden Koppellenker (12) sitzt.

4. Cabriolet-Fahrzeug nach Anspruch 3,
**dadurch gekennzeichnet,**
**dass** das gemeinsame Drehgelenk (14) zwischen zwei äußeren Drehgelenken (13, 19) am Koppellenker (12) angeordnet ist, wobei die äußeren Drehgelenke (13, 19) jeweils einem mit der Fahrzeugkarosserie (6) und einem mit der Heckklappe (4) verbundenen Gelenkstab (8, 16) zugeordnet sind.

5. Cabriolet-Fahrzeug nach Anspruch 4,
**dadurch gekennzeichnet,**
**dass** der Abstand zwischen dem äußeren Drehgelenk (13) am Koppellenker (12), an dem der karosserieseitige Gelenkstab (8) gekoppelt ist, und dem gemeinsamen Drehgelenk (14) größer ist als der Abstand zwischen dem gemeinsamen Drehgelenk (14) und dem äußeren Drehgelenk (19), an dem der heckklappenseitige Gelenkstab (16) gekoppelt ist.

6. Cabriolet-Fahrzeug nach Anspruch 4 oder 5,
**dadurch gekennzeichnet,**
**dass** der Koppellenker (12) im gemeinsamen Drehgelenk (14) einen Knick aufweist.

7. Cabriolet-Fahrzeug nach einem der Ansprüche 1 bis 6,
**dadurch gekennzeichnet,**
**dass** ein mit der Fahrzeugkarosserie (6) gekoppelter Gelenkstab (9) der Heckklappenkinematik (5) von einem Stellglied (7) beaufschlagt wird.

8. Cabriolet-Fahrzeug nach einem der Ansprüche 1 bis 7,
**dadurch gekennzeichnet,**
**dass** der Ablageraum der Kofferraum des Fahrzeugs ist.

9. Cabriolet-Fahrzeug nach einem der Ansprüche 1 bis 8,
**dadurch gekennzeichnet,**
**dass** das Fahrzeugdach (1) als Hardtop mit mindestens zwei starren, gelenkig gekoppelten Dachteilen (2, 3) ausgebildet ist.
